# EUROPÄISCHE PATENTSCHRIFT

(11) **EP 1 352 482 B1**
(45) Veröffentlichungstag und Bekanntmachung des Hinweises auf die Patenterteilung: **05.07.2006**
(21) Anmeldenummer: 02701195.6
(22) Anmeldetag: 17.01.2002
(51) Int. Cl.: H04B 1/48

(54) **ELEKTRISCHES SCHALTMODUL, SCHALTMODULANORDNUNG UND VERWENDUNG DES SCHALTMODULS UND DER SCHALTMODULANORDNUNG**
ELECTRIC CIRCUIT MODULE, CIRCUIT MODULE ARRANGEMENT AND USE OF SAID CIRCUIT MODULE AND OF SAID CIRCUIT MODULE ARRANGEMENT
MODULE DE COMMUTATION ELECTRIQUE, SON MODE DE COUPLAGE ET LEUR UTILISATION

(30) Priorität: 18.01.2001 DE 10102201
(43) Veröffentlichungstag der Anmeldung: 15.10.2003
(60) Teilanmeldung: 06010317.3
(73) Patentinhaber: EPCOS AG, 81669 München (DE)
(72) Erfinder: BLOCK, Christian, A-A-8510 Stainz (AT); FLUEHR, Holger, A-A-8010 Graz (AT)
(74) Vertreter: Epping - Hermann - Fischer
(86) Internationale Anmeldenummer: PCT/DE2002/000129
(87) Internationale Veröffentlichungsnummer: WO 2002/058239

(56) Entgegenhaltungen:
- EP-A- 0 784 384
- EP-A- 0 820 155
- WO-A-00/46931
- US-A- 5 815 804
- LUCERO ET AL.: "DESIGN OF AN LTCC SWITCH DIPLEXER FRONT-END MODULE FOR GSM/DCS/PCS APPLICATIONS" IEEE RADIO FREQUENCY INTEGRATED CIRCUITS SYMPOSIUM, 20. - 22. Mai 2001, Seiten 213-216, XP002216967 PHOENIX US

## Beschreibung

Die Erfindung betrifft ein elektrisches Schaltmodul mit einem Schalter, der einen Sender- und einen Empfängereingang sowie einen Ausgang aufweist und der wahlweise einen der Eingänge mit dem Ausgang elektrisch leitend verbindet, und mit passiven Bauelementen, die ein Tiefpaßfilter bilden, welches mit einem Sendereingang des Schalters elektrisch leitend verbunden ist.

Es sind Schaltmodule der eingangs genannten Art bekannt, bei denen der Schalter aus PIN-Dioden zusammengesetzt und somit stromgesteuert ist. Dabei werden Tiefpaßfilter verwendet, die in eine LTCC-Vielschichtkeramik mit 10 bis 15 Keramiklagen integriert sind. Diese Schaltmodule werden als Multiband-Frontendmodule für Mobiltelefone verwendet und weisen für mindestens zwei verschiedene Frequenzbänder jeweils einen Empfänger- und einen Sendereingang auf.

Solche bekannten Schaltmodule erfüllen die folgenden verschiedenen Funktionen:

| | |
|---|---|
| Funktion 1: | Verknüpfung der verwendeten Frequenzbänder zu einer Antenne |
| Funktion 2: | Wahl des Frequenzbandes |
| Funktion 3: | Wahl zwischen Sende- und Empfangsbetrieb |
| Funktion 4: | Filterung der von einem Leistungsverstärker kommenden Signale |
| Funktion 5: | Filterung der über die Antenne empfangenen Signale |

Funktionen 1 und 2 wird von einem Diplexer erfüllt, der aus passiven Komponenten zusammengesetzt und in das Passivmodul integriert ist. Die Funktion 3 wird von mittels PIN-Dioden realisierten Umschaltern erfüllt. Die Filterung der von den Verstärkern kommenden Signale wird von Tiefpaß- oder Bandpaßfiltern erfüllt, während für die Funktion 5 monolithische Mikrowellenkeramik, LC-Filter, SAW-(Surface Acoustic Wave) oder/und BAW-(Bulk Acoustic Wave)-Bandpaßfilter eingesetzt werden.

Die bekannten Schaltmodule haben den Nachteil, daß die verwendeten Diodenschalter für ihre Funktion einen Schaltstrom von bis zu 10 mA benötigen, der durch die hierfür nötige Akkuleistung hauptsächlich die maximale Sprechdauer des Mobiltelefons negativ beeinflußt.

Desweiteren hat das bekannte Schaltmodul den Nachteil einer hohen Einfügedämpfung, die sich vor allem aus der Vielzahl der für den Diplexer benötigten passiven Komponenten, wie Spulen und Kondensatoren zusammen mit den Umschalter bildenden Dioden und zusammen mit den Sendefiltern auf höhere Verlustwerte (teilweise > 1,0 dB) addiert.

Desweiteren hat das bekannte Schaltmodul den Nachteil, daß aufgrund der verschiedenen Wahlfunktionen, einerseits zwischen Senden und Empfangen und andererseits zwischen den Frequenzbändern, eine Vielzahl von passiven Bauelementen in dem Passivmodul integriert sind, was zu einem hohen Verlustaufwand und einer begrenzten Miniaturisierbarkeit des bekannten Schaltmoduls führt.

Ferner zieht die Verwendung von Dioden die Notwendigkeit von weiteren passiven Komponenten, beispielsweise Vorwiderstände oder Kondensatoren, nach sich.

Darüber hinaus haben die bekannten Schaltmodule den Nachteil, daß aufgrund der großen Anzahl von passiven Bauelementen das vielschichtkeramische Passivmodul eine hohe Komplexität mit entsprechend erhöhter Entwicklungsdauer und geringer Flexibilität bei der Anpassung an geänderte Anforderungen aufweist. Durch die für den Betrieb der PIN-Diode benötigten Transformationsleitungen wird die Komplexität des Passivmoduls und dessen Baugröße zusätzlich vergrößert.

Die bekannten Schaltmodule haben ferner den Nachteil, daß mit ihnen die Integration einer Vielzahl von verschiedenen Frequenzbändern beziehungsweise einer entsprechenden Umschaltfunktion aufgrund der Tatsache, daß pro Umschaltfunktion jeweils zwei Dioden notwendig sind, aus Platzgründen nicht realisierbar sind.

Es sind ferner Schaltmodule der Eingangs genannten Art bekannt, bei denen ein Galliumarsenid-Schalter auf einem Laminat aufgebracht ist. Die Tiefpaßfilter sind dabei als diskrete Bauelemente neben dem Schalter auf dem Laminat aufgebracht.

Diese Schaltmodule haben den Nachteil, daß sie sehr viel Platz beanspruchen und deshalb extern auf der Mobiltelefonplatine angeordnet werden müssen.

Aus der Druckschrift WO 00/46931 ist ein Dual-Band-Schaltmodul bekannt, das in ein LTCC-Substrat integrierte Antennenschalter, Tief pa β filter und Band pa β filter aufweist.

Aus der Druckschrift US 5815804 ist ein Dual-Band-Schaltmodul bekannt, das Tief- bzw. Bandpaßfilter sowie einen spannungsgesteuerten Antennenschalter aufweist.

Ziel der vorliegenden Erfindung ist es, ein Schaltmodul anzugeben, das mit einem sehr geringen Schaltstrom auskommt und dabei eine niedrige Einfügedämpfung aufweist und wenig Platz beansprucht.

Dieses Ziel wird erfindungsgemäß durch ein Schaltmodul nach Patentanspruch 1 erreicht. Vorteilhafte Ausgestaltungen der Erfindung, eine Schaltmodulanordnung und die Verwendung des Schaltmoduls sind den weiteren Ansprüchen zu entnehmen.

Die Erfindung gibt ein elektrisches Schaltmodul an, das einen spannungsgesteuerten Schalter aufweist, der einen Sendereingang und einen Empfängereingang sowie einen Ausgang umfaßt. Der Schalter verbindet wahlweise einen der Eingänge mit dem Ausgang elektrisch leitend. Ferner weist das elektrisch erfindungsgemäße Schaltmodul passive Bauelemente auf, die ein Tiefpaßfilter bilden, welches mit einem Sendereingang des Schalters elektrisch leitend verbunden ist. Dabei sind die passiven Bauelemente Bestandteil eines Passivmoduls, das als Vielschichtkeramik ausgebildet ist. Das Passivmodul weist einen Grundkörper aus übereinanderliegenden dielektrischen Schichten und elektrisch leitenden Schichten auf. Der Schalter des Schaltmoduls ist auf der Oberseite oder auf der Unterseite des Grundkörpers angeordnet.

Ferner betrifft die Erfindung eine Schaltmodulanordnung mit dem erfindungsgemäßen Schaltmodul, wobei jeder Sendereingang über ein Tiefpaßfilter mit einem Senderverstärker und wobei jeder Empfängereingang über ein Bandpaßfilter mit einem Empfängerverstärker elektrisch leitend verbunden ist. Ferner ist der Ausgang des Schaltmoduls mit einer Antenne verbunden. Eine solche Schaltmodulanordnung kann beispielsweise in Mobiltelefonen benutzt werden, weswegen die vorteilhafte Verwendung des erfindungsgemäßen Schaltmoduls und der erfindungsgemäßen Schaltmodulanordnung als Frontendmodul in einem Mobilfunkgerät ein weiterer Gegenstand der Erfindung ist.

Das erfindungsgemäße Schaltmodul hat den Vorteil, daß der Schalter ein spannungsgesteuerter Schalter ist, der nicht mit Hilfe eines Stroms, sondern mit Hilfe einer elektrischen Spannung geschaltet wird und somit einen äußerst geringen Stromverbrauch aufweist. Dadurch kann auf die Verwendung von einen hohen Stromverbrauch aufweisenden Dioden verzichtet werden. Ferner kann auf die für den Betrieb von Dioden notwendigen zusätzlichen passiven Komponenten, wie Kondensatoren oder Vorwiderstände, verzichtet werden. Somit hat das erfindungsgemäße Schaltmodul den Vorteil eines geringen Stromverbrauchs und den Vorteil einer geringen Komplexität.

Die genannten Vorteile gelten sowohl für das Schaltmodul als auch für die Anordnung des Schaltmoduls beziehungsweise die Verwendung des Schaltmoduls.

Es ist ferner besonders vorteilhaft, wenn der Schalter des Schaltmoduls einen Schaltstrom von weniger als 10 µA aufweist. Somit wird ein Schaltmodul realisiert, das einen sehr geringen Stromverbrauch aufweist.

Desweiteren ist es vorteilhaft, wenn der Schalter des Schaltmoduls eine sehr geringe Einfügedämpfung < 1 dB aufweist. Dadurch verbessert sich die Sende- beziehungsweise Empfangsleistung eines Mobilfunkgeräts, das das erfindungsgemäße Schaltmodul verwendet.

Eine weitere vorteilhafte Ausführungsform der Erfindung betrifft ein Schaltmodul, das ein Bandpaßfilter umfaßt, welches auf der Ober- oder Unterseite des Grundkörpers angeordnet ist. Dabei kann das Bandpaßfilter auch in einer passenden Ausnehmung des Grundkörpers angeordnet sein. Ferner ist das Bandpaßfilter mit einem Empfängereingang elektrisch leitend verbunden. Als Bandpaßfilter können besonders vorteilhaft zum Beispiel LC-, SAW-, BAW- oder Mikrowellenfilter verwendet werden.

Aufgrund des verringerten Platzbedarfs des spannungsgesteuerten Schalters im Vergleich zu den bekannten zum Schalten verwendeten Dioden bietet das erfindungsgemäße Schaltmodul die Möglichkeit, die für das Empfangen von Funksignalen notwendigen Bandpaßfilter zusammen mit dem spannungsgesteuerten Schalter auf einer Seite des Grundkörpers mit zu integrieren, und dabei eine höhere Integrationsdichte mit verringertem Gesamtplatzbedarf des Schaltmoduls zu erzielen. Durch die Verwendung von keramischen Ferromagnetika oder auch Ferrimagnetika gelingt auch die Integration von höheren Induktivitätswerten bzw. deren Miniaturisierung bei gleichzeitig hohen Güten.

Das erfindungsgemäße Schaltmodul kann insbesondere als Multiband-Frontendmodul ausgebildet sein, indem der Schalter eine Anzahl K > 1 Sendereingänge und eine Anzahl L > 1 Empfängereingänge aufweist. Der Schalter verbindet dabei wahlweise einen der Eingänge mit seinem Ausgang elektrisch leitend. Die passiven Bauelemente des elektrischen Schaltmoduls bilden eine Anzahl K von Tiefpaßfiltern, von denen jedes mit jeweils einem Sendereingang elektrisch leitend verbunden ist.

Ein solches Schaltmodul hat den Vorteil, daß der Schalter neben der Umschaltfunktion zwischen Senden und Empfangen auch das Umschalten zwischen verschiedenen Frequenzbändern ermöglicht. Insbesondere können auch durch.Wahl geeigneter Anzahlen K und L (K = 2, 3, 4 ... und L = 2, 3, 4 ...) eine Vielzahl verschiedener Frequenzen mit dem erfindungsgemäßen Schaltmodul verarbeitet werden. Es ist daher insbesondere vorteilhaft, wenn jedes Tiefpaßfilter des erfindungsgemäßen Schaltmoduls für einen unterschiedlichen Mobilfunkstandard, ausgewählt aus GSM, PCN, PCS oder einem anderen Mobilfunkstandard, geeignet ist. Das erfindungsgemäße Schaltmodul kann also zwischen verschiedenen Sendereingängen, die unterschiedlichen Mobilfunkfrequenzen zugeordnet sein können, umschalten. Dadurch kann ein Multibandmodul realisiert werden.

Ein solches Schaltmodul hat ferner den Vorteil, daß auf einen Diplexer, der nach dem eingangs beschriebenen Stand der Technik für das Wählen zwischen verschiedenen Frequenzbändern benötigt wird, verzichtet werden kann. Daraus resultiert der Vorteil, daß weniger passive Komponenten in das Passivmodul integriert sind, wodurch sich der Entwicklungsaufwand verringert beziehungsweise die Flexibilität bei der Anpassung des Schaltmoduls an veränderte Anforderungen erhöht.

Eine reduzierte Anzahl von passiven Komponenten in dem Passivmodul hat ferner den Vorteil einer verringerten Bauhöhe und damit eines verringerten Platzbedarfs des Schaltmoduls.

Insbesondere wird es dadurch möglich, ein Schaltmodul zu realisieren, dessen Höhe kleiner als 1,8 mm ist, womit ein solches Schaltmodul den Vorteil hat, daß es den Standardabmessungen der Mobilfunkgeräte herstellenden Firmen entspricht.

Der spannungsgesteuerte Schalter des Schaltmoduls kann besonders vorteilhaft so ausgeführt sein, daß er einen integrierten Schaltkreis umfaßt, der in GaAs-Technologie hergestellt ist. Ein solcher integrierter Schaltkreis kann beispielsweise auf der Basis von Feldeffekttransistoren hergestellt sein. Ein in Galliumarsenid-Technologie hergestellter Schalter hat mehrere Vorteile: Er ist schnell, weist geringe Verluste hinsichtlich der Einfügedämpfung auf und ferner weist er gute Hochfrequenzeigenschaften auf.

Zusätzlich kann das Passivmodul in einer vorteilhaften Ausführungsform weitere passive Bauelemente aufweisen, die wenigstens ein Bandpaßfilter bilden, das mit einem Empfärigereingang elektrisch leitend verbunden ist. Anstelle eines extra auf der Ober- beziehungsweise Unterseite des Grundkörpers angeordneten Bandpaßfilters wäre in diesem Fall das für das Weiterverarbeiten von über eine Antenne empfangenen Signalen benötigte Bandpaßfilter bereits in einer sehr kompakten Ausführungsform in das Schaltmodul integriert, wodurch der benötigte Platzbedarf noch weiter verringert werden kann.

Das erfindungsgemäße Schaltmodul kann besonders vorteilhaft in einer LTCC (Low Temperature Cofired Ceramic)-Technologie hergestellt sein. Damit ist eine Gemeinsamsinterung von keramischen Grünfolien bei relativ niedrigen Sintertemperaturen < 1000°C gemeint. Eine solche Gemeinsamsinterung von Keramikfolien bei niedrigen Sintertemperaturen hat den Vorteil, daß entweder Kupferelektroden (Sinterung bei reduziertem Sauerstoffgehalt) oder Silberelektroden als elektrisch leitende Schichten verwendet werden können. Beide Materialien zeichnen sich durch gute HF-Eigenschaften aus. Die Gemeinsamsinterung führt zu einem schnellen Herstellungsprozeß eines kompakten, monolithischen Bauelements.

Als spannungsgesteuerter Schalter kann ein Galliumarsenid-Schalter verwendet werden. Solche Schalter benötigen für jeden Ein- bzw. Ausgang einen Steuereingang. Entsprechend muß jeder Steuereingang des Schalters mit einer Steuerleitung verbunden werden. Dabei werden die Steuereingänge durch die Steuerleitungen so gesetzt, daß genau ein Steuereingang auf "high" und die anderen Steuereingänge auf "low" gesetzt sind. Dadurch wird eine genau definierte Schalterstellung für den Schalter eingestellt.

Um die Zahl der Steuerleitungen zu reduzieren, ist es besonders vorteilhaft, wenn zusätzlich zum Schalter ein Decoder vorgesehen ist, der die an seinen Eingängen anliegenden logischen Signale in für die Steuerung des spannungsgesteuerten Schalters geeignete Steuersignale umsetzt. Vorteilhafterweise ist der Decoder auf der Ober- oder Unterseite des Grundkörpers angeordnet. Die Steuerausgänge des Decoders sind über Steuerleitungen mit Steuereingängen des Schalters verbunden. Die Zahl der Steuereingänge des Decoders ist gegenüber der Zahl der Steuereingänge des Schalters reduziert, wodurch die Zahl der von außen heranzuführenden Steuerleitungen in vorteilhafterweise vermindert ist. Die an den Eingängen des Decoders anliegenden Signale entsprechen einer binären Zahl, wobei auch mehrere Eingänge mit dem Schaltzustand "high" beaufschlagt sein können. Diese Eingangssignale werden durch den Decoder so umgewandelt, daß am Decoderausgang nur noch genau eine Steuerleitung mit dem Signal "high" versehen ist.

In einer weiteren vorteilhaften Ausführungsform der Erfindung umfaßt das Schaltmodul einen Verstärker, dessen passive Komponenten in das Passivmodul integriert sind und dessen aktive Komponenten auf der Ober- oder Unterseite des Grundkörpers angeordnet sind. Als Verstärker kommt beispielsweise ein "Power-Amplifier" oder auch ein "Low-Noise-Amplifier (LNA)" in Betracht. Der LNA wird beispielsweise benötigt, falls Bandpaßfilter in das Passivmodul integriert sind. In diesem Fall wird der LNA nach dem Bandpaßfilter geschaltet. Die genannten Verstärker stellen zusätzliche Funktionalitäten des Schaltmoduls zur Verfügung, weswegen es vorteilhaft ist, sie in das Schaltmodul zu integrieren.

Es ist ferner vorteilhaft, wenn das Tiefpaßfilter, das in das Passivmodul integriert ist, ein Filter höherer Ordnung ist. Ein solches Filter erhält man beispielsweise durch Erweiterung eines π-Filters, welches aus zwei Kondensatoren besteht, die durch eine Induktivität miteinander verbunden sind. Die Erweiterung des π-Filters kann in einer Überbrückung der Induktivität durch einen zusätzlichen Kondensator bestehen. Dadurch erhält man zusätzliche Pole für das Filter, wodurch das Filter insbesondere dazu geeignet ist, höhere Harmonische einer Grundfrequenz f₀ zu dämpfen. Da beim Betrieb eines Galliumarsenid-Schalters mit niedrigen Spannungen genau solche höhere Harmonische einer Grundfrequenz f₀ entstehen, ist es vorteilhaft, ein Tiefpaßfilter höherer Ordnung in dem erfindungsgemäßen Schaltmodul zu verwenden, um diese störenden höheren Harmonischen zu unterdrücken.

Im folgenden wird die Erfindung anhand von Ausführungsbeispielen und den dazu gehörigen Figuren näher erläutert.
- Figur 1: zeigt beispielhaft ein erfindungsgemäßes Schaltmodul in einer erfindungsgemäßen Schaltmodulanordnung als schematisches Blockschaltbild.
- Figur 2: zeigt beispielhaft ein erfindungsgemäßes elektrisches Schaltmodul im schematischen Querschnitt.
- Figur 3: zeigt beispielhaft ein erfindungsgemäßes Schaltmodul unter Verwendung eines Decoders als schematisches Blockschaltbild.

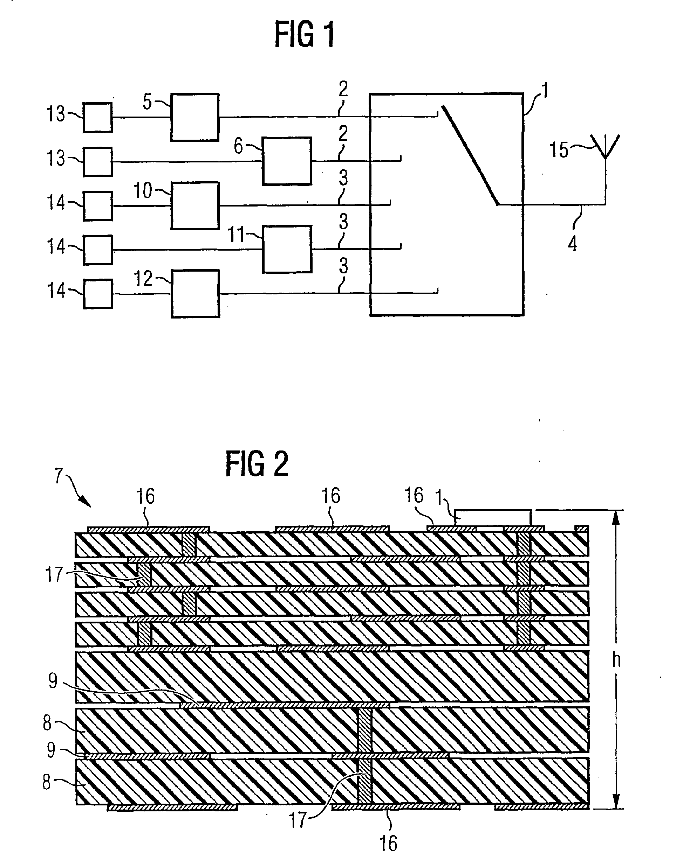

Figur 1 zeigt ein Schaltmodul mit einem Schalter 1, der einen Ausgang 4 sowie zwei Sendereingänge 2 und drei Empfängereingänge 3 aufweist. Darüber hinaus weist das Schaltmodul zwei Tiefpaßfilter 5, 6 auf, wobei das Tiefpaßfilter 5 für das GSM-Frequenzband und das Tiefpaßfilter 6 für das PCN/PCS-Frequenzband ausgelegt sein kann. Der Schalter 1 verbindet wahlweise einen der Eingänge 2, 3 mit dessen Ausgang 4. Das Schaltmodul weist ferner Bandpaßfilter 10, 11, 12 auf, die mit den Empfängereingängen 3 verbunden sind. Das Bandpaßfilter 10 ist an die GSM-Frequenz, das Bandpaßfilter 11 an die PCN-Frequenz und das Bandpaßfilter 12 an die PCS-Frequenz angepaßt. Die Bandpaßfilter 10, 11, 12 können entweder als separate Bauelemente auf der Ober- oder Unterseite des Grundkörpers angeordnet oder aber auch aus in das Passivmodul integrierten passiven Bauelementen aufgebaut sein.

Bezüglich der erfindungsgemäßen Schaltmodulanordnung sind die Sendereingänge 2 des Schalters 1 mit Senderverstärkern 13 elektrisch leitend verbunden. Die Senderverstärker 13 sind wie die Tiefpaßfilter 5, 6 an die Funkfrequenzen GSM beziehungsweise PCN/PCS angepaßt. Die Empfängereingänge 3 sind über die Bandpaßfilter 10, 11, 12 mit Empfängerverstärkern 14 elektrisch leitend verbunden, wobei die Empfängerverstärker 14 an die Frequenzbändern GSM, PCN beziehungsweise PCS angepaßt sind. Der Ausgang 4 des Schalters 1 ist mit einer Antenne 15 verbunden. Die von der Antenne 15 empfangenen Signale können nun mittels des Schalters 1 entweder dem Bandpaßfilter 11, dem Bandpaßfilter 12 oder dem Bandpaßfilter 10 zugeleitet werden, wo sie je nach verwendeter Funkfrequenz gefiltert und in Verstärkern 14 weiter verarbeitet werden. Die von den Senderverstärkern 13 gelieferten Signale werden durch die Tiefpaßfilter 5, 6 gefiltert und wahlweise der Antenne 15 zum Senden eines Signals zugeführt.

Figur 2 zeigt ein Schaltmodul mit einem Grundkörper 7, der eine Vielschichtkeramik mit dielektrischen Schichten 8 und dazwischen angeordneten elektrisch leitenden Schichten 9 umfaßt. Die dielektrischen Schichten 8 sind keramische Schichten, die beispielsweise eine Dielektrikumsfunktion für einen Kondensator aufweisen. Beispielsweise kann als Keramik eine Al₂O₃-Keramik mit Glasanteilen verwendet werden. Eine solche Keramik hat typischerweise ein effektives ε von 7,8 bei niedrigen Verlusten.

Neben den dielektrischen Schichten kann das Schaltmodul noch Widerstandsschichten aufweisen, die durch Auftragen einer Widerstandspaste auf eine elektrisch leitende Schicht 9 hergestellt werden.

Neben den elektrisch leitenden Schichten 9, die zwischen den dielektrischen Schichten 8 angeordnet.sind, umfaßt der Grundkörper 7 auch noch Durchkontaktierungen 17, die die elektrisch leitenden Schichten 9 verschiedener Ebenen miteinander elektrisch leitend verbinden. Die elektrisch leitenden Schichten 9 können beispielsweise als Kupferschichten ausgeführt sein. Auf der Unterseite des Grundkörpers 7 sind Außenkontakte 16 angeordnet, mit deren Hilfe das Schaltmodul auf einer Platine festgelötet und kontaktiert werden kann. Außenkontakte 16 befinden sich auch auf der Oberseite des Grundkörpers 7, so daß dort der spannungsgesteuerte Schalter 1 und gegebenenfalls auch weitere passive Filterkomponenten befestigt und kontaktiert werden können.

Der Schalter 1 kann beispielsweise durch Kleben und zusätzliches Drahtbonden befestigt und elektrisch kontaktiert werden. Als Schalter 1 wird vorzugsweise ein GaAs-Mehrfachschalter verwendet, wie er unter der Bezeichnung PHEMT GaAs IC High Power SP5T Switch 0.1-2 GHz von der Firma Alpha Industries, Inc. geliefert wird. Ein solcher Schalter weist im Frequenzbereich zwischen 0,1 und 0,5 GHz eine Einfügedämpfung von 0,8 dB auf. Es handelt sich dabei um einen auf Galliumarsenid-Basis gefertigten integrierten Schaltkreis mit FET, dessen Pinflächen durch Löten mit dem Grundkörper 7 verbunden werden können.

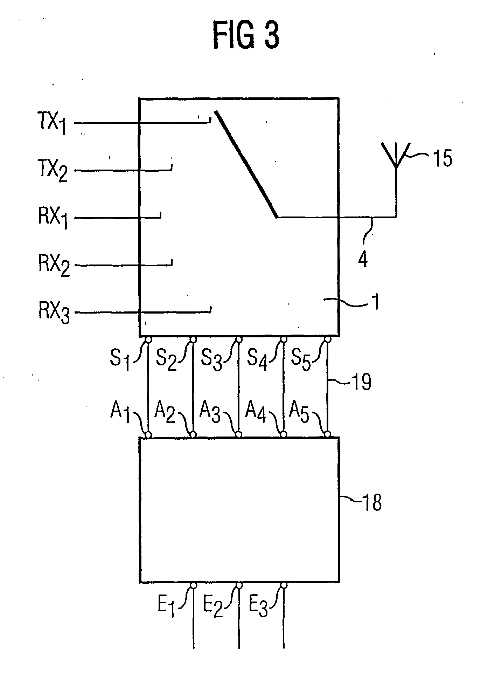

Figur 3 zeigt einen spannungsgesteuerten Schalter 1 mit einem Ausgang 4, an dem eine Antenne 15 angeschlossen ist. Der Schalter 1 hat Sendereingänge TX₁, TX₂ und Empfängereingänge RX₁, RX₂ und RX₃. Der Schalter 1 wird über Steuereingänge S₁, S₂, S₃, S₄, S₅ gesteuert. Die Steuerung erfolgt dabei dergestalt, daß genau einer der Steuereingänge S₁, S₂, S₃, S₄ und S₅ auf "High" gesetzt ist, während die anderen Steuereingänge auf "Low" gesetzt sind. Durch den an den Schalter 1 angeschlossenen Decoder 18 kann die Zahl der benötigten Eingänge reduziert werden. Der Decoder 18 kann beispielsweise ein 1-aus 5-Decoder sein. Er weist Steuereingänge E₁, E₂ und E₃ sowie Steuerausgänge A₁, A₂, A₃, A₄ und A₅ auf. Die Steuerausgänge A₁, A₂, A₃, A₄ und A₅ sind durch Steuerleitungen 19 mit den Steuereingängen S₁, S₂, S₃, S₄, S₅ des Schalters 1 verbunden.

Die Decodierung eines an den Eingängen E₁, E₂ und E₃ des Decoders 18 anliegenden logischen Signals in für die Steuerung des Schalters 1 geeignete, an den Steuereingängen S₁, S₂, S₃, S₄, S₅ des Schalters 1 anliegenden Signale wird durch die folgende Übersetzungstabelle beschrieben:

**Tabelle 1: Logische Zustände der Steuereingänge S₁, S₂, S₃, S₄, S₅ in Abhängigkeit der logischen Zustände an den Steuereingängen E₁, E₂ und E₃. Es bedeutet 1 = "high" und 0 = "low".**

| E₁ | E₂ | E₃ | → | S₁ | S₂ | S₃ | S₄ | S₅ |
|---|---|---|---|---|---|---|---|---|
| 0 | 0 | 0 | | 1 | 0 | 0 | 0 | 0 |
| 0 | 0 | 1 | | 0 | 1 | 0 | 0 | 0 |
| 0 | 1 | 0 | | 0 | 0 | 1 | 0 | 0 |
| 0 | 1 | 1 | | 0 | 0 | 0 | 1 | 0 |
| 1 | 0 | 0 | | 0 | 0 | 0 | 0 | 1 |

Die Erfindung beschränkt sich nicht auf die dargestellten Ausführungsbeispiele, sondern wird in ihrer allgemeinsten Form durch Patentanspruch 1 definiert.

## Patentansprüche

1. Elektrisches Schaltmodul
- mit einem spannungsgesteuerten Schalter (1), der eine Anzahl K > 1 Sendereingänge (2) und eine Anzahl L > 1 Empfängereingänge (3) und K+L Schaltzustände aufweist und der in jedem Schaltzustand genan einen der Eingänge (2, 3) an einen Antennenausgang (4) anschließt,
- und mit passiven Bauelementen, die eine Anzahl K Tiefpaßfilter (5, 6) bilden, welche jeweils an einen der Sendereingänge (2) angeschlossen sind,
- bei dem die Tiefpaßfilter (5, 6) Bestandteil eines vielschichtkeramischen Passivmoduls sind, das einen Grundkörper (7) aus übereinanderliegenden dielektrischen Schichten (8) und elektrisch leitenden Schichten (9) umfaßt,
- bei dem der Schalter (1) auf der Ober- oder Unterseite des Grundkörpers (7) angeordnet ist.

2. Schaltmodul nach Anspruch 1,
das ein Bandpaßfilter (10, 11, 12) umfaßt, welches auf der Ober- oder Unterseite des Grundkörpers (7) angeordnet und mit einem Empfängereingang (3) elektrisch leitend verbunden ist.

3. Schaltmodul nach Anspruch 1 oder 2,
bei dem der Schalter (1) einen in GaAs-Technologie hergestellten integrierten Schaltkreis umfaßt.

4. Schaltmodul nach Anspruch 2 oder 3,
bei dem jedes Tiefpaßfilter (5, 6) für einen unterschiedlichen Mobilfunkstandard, ausgewählt aus GSM, PCN und PCS, geeignet ist.

5. Schaltmodul nach Anspruch 1, 3 oder 4,
das zusätzliche, in das Passivmodul integrierte passive Bauelemente aufweist, die wenigstens ein Bandpaßfilter (10, 11, 12) bilden, das mit einem der Empfängereingänge (3) elektrisch leitend verbunden ist.

6. Schaltmodul nach Anspruch 1 bis 5,
das in LTCC-Technologie hergestellt ist.

7. Schaltmodul nach Anspruch 1 bis 6,
bei dem auf der Ober- oder Unterseite des Grundkörpers (7) ein Decoder (18) angeordnet ist, der Steuerausgänge (A₁, A₂, A₃, A₄, A₅) und Steuereingänge (E₁, E₂, E₃) aufweist, und bei dem die Steuerausgänge (A₁, A₂, A₃, A₄, A₅) des Decoders (18) mit Steuereingängen (S₁, S₂, S₃, S₄, S₅) des Schalters (1) mittels Steuerleitungen (19) verbunden sind.

8. Schaltmodul nach Anspruch 1 bis 7,
das einen Verstärker umfaßt, dessen passive Komponenten in das Passivmodul integriert sind und dessen aktive Komponenten auf der Ober- oder Unterseite des Grundkörpers (7) angeordnet sind.

9. Schaltmodul nach Anspruch 1 bis 8,
bei dem die Tiefpaßfilter (5, 6) jeweils ein Filter höherer Ordnung sind.

10. Schaltmodulanordnung mit einem Schaltmodul nach Anspruch 1 bis 9,
die K Sendeverstärker und L Empfängerverstärker aufweist,
bei der
- jeder Sendereingang (2) mit einem Senderverstärker (13),
- jeder Empfängereingang (3) mit einem Empfängerverstärker (14)
- und der Antennenausgang (4) mit einer Antenne (15) elektrisch verbindbar ist.

11. Verwendung eines Schaltmoduls nach Anspruch 1 bis 9 oder einer Schaltmodulanordnung nach Anspruch 10 als Frontendmodul in einem Mobilfunkgerät.

## Claims

1. Electrical switching module
- having a voltage-controlled switch (1), which has a number K > 1 of transmitter inputs (2) and a number L > 1 of receiver inputs (3) and K+L switching states, and which connects in each switching state exactly one of the inputs (2, 3) to an antenna output (4),
- and having passive components that form a number K of low-pass filters (5, 6), which are each connected to one of the transmitter inputs (2),
- in which the low-pass filters (5, 6) are part of a multilayer ceramic passive module, which comprises a base bodysubstrate (7) made of dielectric layers (8) and electrically conducting layers (9) lying one on top of the other,
- in which the switch (1) is arranged on the upper side or lower side of the base bodysubstrate (7).

2. Switching module according to Claim 1,
which comprises a band-pass filter (10, 11, 12), which is arranged on the upper side or lower side of the base bodysubstrate (7), and is connected to a receiver input (3) in an electrically conductive conducting fashion.

3. Switching module according to Claim 1 or 2,
in which the switch (1) comprises an integrated circuit fabricated in GaAs technology.

4. Switching module according to Claim 2 or 3,
in which each low-pass filter (5, 6) is suitable for a different mobile communications standard, chosen from GSM, PCN, and PCS.

5. Switching module according to Claim 1, 3 or 4,
which comprises additional passive components integrated into the passive module that form at least one band-pass filter (10, 11, 12), which is connected to one of the receiver inputs (3) in an electrically conductiveconducting fashion.

6. Switching module according to Claim 1 to 5,
which is fabricated in LTCC technology.

7. Switching module according to Claim 1 to 6,
in which a decoder (18) is arranged on the upper side or lower side of the base bodysubstrate (7), which comprises control outputs (A₁, A₂, A₃, A₄, A₅) and control inputs (E₁, E₂, E₃), and in which the control outputs (A₁, A₂, A₃, A₄, A₅) of the decoder (18) are connected to the control inputs (S₁, S₂, S₃, S₄, S₅) of the switch (1) by control lines (19).

8. Switching module according to Claim 1 to 7,
which comprises an amplifier whose passive components are integrated in the passive module and whose active components are arranged on the upper side or lower side of the base bodysubstrate (7).

9. Switching module according to Claim 1 to 8,
in which the low-pass filters (5, 6) are each a higher- order filter.

10. Switching module arrangement having a switching module according to Claim 1 to 9, which has K transmitter amplifiers and L receiver amplifiers,
in which
- each transmitter input (2) is electrically connected to a transmitter amplifier (13),
- each receiver input (3) is electrically connected to a receiver amplifier (14)
- and the antenna output (4) is electrically connected to an antenna (15).

11. Use of a switching module according to Claim 1 to 9 or a switching module arrangement according to Claim 10 as a frontend module in a mobile communications device.

## Revendications

1. Module de commutation électrique
- comprenant un commutateur (1) commandé par la tension, qui a un nombre K > 1 d'entrées (2) d'émetteur et un nombre L > 1 d'entrées (3) de récepteur, et K + L états de commutation et qui, dans chaque état de commutation, relie exactement l'une des entrées (2, 3) à une sortie (4) d'antenne,
- et comprenant des composants passifs qui forment un nombre K de filtres (5, 6) passe-bas qui sont reliés respectivement à l'une des entrées (2) d'émetteur,
- dans lequel les filtres (5, 6) passe-bas font partie d'un module passif en céramique à plusieurs couches, qui comprend un corps (7) de base constitué de couches (8) diélectriques superposées et de couches (9) conductrices de l'électricité,
- dans lequel le commutateur (1) est disposé sur la face supérieure ou la face inférieure du corps (7) de base.

2. Module de commutation suivant la revendication 1, qui comprend un filtre (10, 11, 12) passe-bande qui est disposé sur la face supérieure ou la face inférieure du corps (7) de base et qui est relié d'une manière conductrice de l'électricité à une entrée (3) de récepteur.

3. Module de commutation suivant la revendication 1 ou 2, dans lequel le commutateur (1) comprend un circuit intégré fabriqué en technologie GaAs.

4. Module de commutation suivant la revendication 2 ou 3, dans lequel chaque filtre (5, 6) passe-bas est approprié pour une norme de téléphonie mobile différente choisie parmi GSM, PCN et PCS.

5. Module de commutation suivant la revendication 1, 3 ou 4, qui a des composants passifs supplémentaires intégrés dans le module passif, qui forment au moins un filtre (10, 11, 12) passe-bande relié d'une manière conductrice de l'électricité à l'une des entrées (3) de récepteur.

6. Module de commutation suivant la revendication 1 à 5, qui est fabriqué en technologie LTCC.

7. Module de commutation suivant l'une des revendications 1 à 6, dans lequel il est disposé, sur la face supérieure ou la face inférieure du corps (7) de base, un décodeur (18) qui a des sorties (A₁, A₂, A₃, A₄, A₅) de commande et des entrées (E₁, E₂, E₃) de commande et dans lequel les sorties (A₁, A₂, A₃, A₄, A₅) de commande du décodeur (18) sont reliées aux entrées (S₁, S₂, S₃, S₄, S₅) de commande du commutateur au moyen de lignes (19) de commande.

8. Module de commutation suivant la revendication 1 à 7, qui comprend un amplificateur dont les composants passifs sont intégrés dans le module passif et dont les composants actifs sont disposés sur la face supérieure ou la face inférieure du corps (7) de base.

9. Module de commutation suivant la revendication 1 à 8, dans lequel les filtres (5, 6) passe-bas sont respectivement un filtre d'ordre supérieur.

10. Dispositif de module de commutation ayant un module de commutation suivant la revendication 1 à 9, qui a K amplificateurs d'émetteur et L amplificateurs de récepteur, dans lequel
- chaque entrée (2) d'émetteur est reliée électriquement à un amplificateur (13) d'émetteur,
- chaque entrée (3) de réception est reliée électriquement à un amplificateur (14) de récepteur,
- et la sortie (4) d'antenne est reliée électriquement à une antenne (15).

11. Utilisation d'un module de commutation suivant la revendication 1 à 9 ou d'un dispositif à module de commutation suivant la revendication 10 comme module frontend dans un appareil de téléphonie mobile.
